# DEMANDE DE BREVET EUROPEEN

(11) **EP 3 075 602 A1**
(43) Date de publication de la demande: **05.10.2016**
(21) Numéro de dépôt: 16162518.1
(22) Date de dépôt: 29.03.2016
(51) Int. Cl.: B60R 5/04, B60R 13/01

(54) **DISPOSITIF DE PROTECTION DE L'HABITACLE D'UN VÉHICULE AUTOMOBILE, POUR LE TRANSPORT DE DÉCHETS OU AUTRES PRODUITS SIMILAIRES**

(30) Priorité: 31.03.2015 FR 1552702
(71) Demandeur: Petiteau, Johan, 38410 Saint Martin d'Uriage (FR); Bouvier, Michel, 38300 Maubec (FR)
(72) Inventeur: PETITEAU, Johan, 38410 SAINT MARTIN D'URIAGE (FR)
(74) Mandataire: Brungard, Yves Francois

(57) **Abrégé**

Le dispositif de protection de l'habitacle d'un véhicule automobile (8) comprend une enveloppe souple adaptable à l'intérieur dudit véhicule et des moyens de maintien de l'enveloppe dans le dit habitacle. L'enveloppe (1) comporte, une bavette de protection (2) qui est agencée pour recouvrir le bord (811) de l'ouverture du coffre, et comporte des moyens de maintien agencés pour maintenir ledit rabat dans la feuillure de pourtour de l'ouverture du coffre. Des volets latéraux (22) sont prévus pour recouvrir les bords arrières des parois latérales du véhicule, et un pan arrière de fermeture (16) permet de recouvrir et protéger le seuil du coffre et le pare-choc et est par ailleurs dimensionné pour constituer une paroi de fermeture arrière de l'enveloppe.

## Description

La présente invention concerne un dispositif de protection de l'habitacle d'un véhicule automobile, particulièrement destiné au transport de déchets, typiquement pour emporter en déchetterie des déchets verts, branchages, tontes de gazon, déchets végétaux de jardinage, etc. On pourra aussi utiliser le dispositif pour le transport confiné d'autres objets, notamment susceptibles de salir l'habitacle du véhicule de transport.

Le dispositif de l'invention vise à permettre d'assurer la propreté de l'intérieur du véhicule lors de tels transports. Les véhicules concernés sont essentiellement les voitures particulières, typiquement de type monospace ou break, comportant un coffre s'ouvrant à l'arrière du véhicule par une porte arrière pouvant se relever par pivotement selon une articulation horizontale supérieure. Mais le dispositif peut également être adapté pour d'autres types de véhicules, tels que berlines classiques, camionnettes, voitures à porte arrière pivotante selon un axe vertical, etc.

L'intérieur des voitures est aujourd'hui très bien fini, mais relativement peu robuste et sujet aux salissures de tout type. Les garnitures de portière, coffre, plafond n'étant pas facilement démontables et lavables, il est intéressant de pouvoir protéger son véhicule lorsqu'on souhaite transporter des déchets, quel qu'en soit le type. Mais ces véhicules, conçus pour le transport de passagers et de leurs bagages, ne sont pas prévus pour accueillir des dispositifs de protection adaptés pour le transport de déchets.

Il en résulte qu'il est quasi impossible de maintenir propre l'intérieur des voitures lorsque l'on cherche à emporter avec son véhicule des déchets verts à la déchèterie.

Des solutions couramment utilisées consistent à utiliser des bâches de protection courantes dans le commerce, mais les dimensions de celles-ci ne sont généralement pas adaptées pour offrir un revêtement correct de l'ensemble du coffre. De plus, même avec des bâches prédécoupées, il est malaisé de maintenir de telles bâches sur les parois sensiblement verticales, telles que les parois latérales du coffre, et encore plus d'assurer au moyen de celles-ci une protection du plafond.

On connaît aussi des dispositifs de protection du plancher du coffre, par bac étanche ou tapis spécifique, pouvant être mieux adaptés aux dimensions des coffres des différents modèles de voiture. Mais ces dispositifs ne protègent pas les parois latérales.

On connaît aussi des dispositifs de protection englobante, pour des petits volumes de déchets ou autres, typiquement seulement de 100 à 300 litres, de type sac ou enveloppe à déchets, agencés éventuellement pour pouvoir être refermés de manière relativement hermétique. La protection assurée par de tels dispositifs peut être efficace mais le volume utile est faible et, placés dans un coffre de voiture, le volume de coffre inutilisable peut être important.

On connaît encore des dispositifs de protection intérieure du coffre, visant à assurer une protection de toutes les parois du coffre.

FR 2966099 décrit un tel système comportant une armature parallélépipédique rectangle formée de tubes assemblés par emboîtement et supportant une bâche de protection, recouvrant les six faces de l'armature dont une face ouvrante au niveau de la porte du coffre. Un tel système présente toutefois l'inconvénient de n'être utilisable que dans des coffres de forme suffisamment régulière pour y placer ladite armature parallélépipédique. De plus ses dimensions doivent être spécifique à chaque modèle de voiture, faute de quoi un volume important inutilisable peut exister entre la structure et sa bâche et les parois du coffre.

DE102004056026 montre un système a priori plus souple d'utilisation puisque ne comportant pas d'armature rigide. Mais le maintien de l'enveloppe de protection nécessite des supports spécifiques à adapter dans le véhicule. De plus, le maintien de l'enveloppe sur ces supports par bandes auto-agrippantes, de type « Velcro ® », complique la mise en place de l'enveloppe de protection. De plus encore, la paroi arrière forme un seul rabat, et il en résulte que lorsque ce rabat est ouvert, donc lors du chargement ou déchargement, les bords arrières des parois latérales et du plafond du coffre ne sont pas biens protégés.

US2013/0161364 montre un dispositif de principe similaire, et les moyens de maintien de l'enveloppe de protection, par des sangles ou bandes auto-agrippantes présentent les mêmes inconvénients.

De manière générale, les dispositifs de protection connus soit ne permettent pas une utilisation optimale de l'espace du coffre, soit ne protègent pas efficacement toutes les parties du véhicule, et/ou nécessitent pour leur maintien l'utilisation de sangles ou similaires dont la mise en place peut être malaisée.

La présente invention a pour but de résoudre les problèmes évoqués ci-dessus, et vise en particulier à dégager le plus de place possible dans l'habitacle grâce à un dispositif adaptable à des dimensions différentes de véhicules, donc ne nécessitant qu'un nombre limité de modèles les plus standardisés possibles, et donc économiques à produire et permettant de n'occuper qu'un espace limité en stockage et sur les rayons des magasins de vente. L'invention vise ainsi à éviter de devoir produire et stocker de nombreux modèles différents, le sur-mesure n'étant envisageable uniquement que dans le cas de distribution par des constructeurs de véhicule, avec des coûts de conception et de fabrication nécessairement plus élevés. L'invention vise aussi, dans cet objectif de standardisation, à proposer des modes de maintien de l'enveloppe de protection le plus compatibles possibles et des formes modulables en fonction du véhicule. Elle vise aussi à assurer une protection efficace de l'ensemble de l'habitacle et de ses ouvertures tant lors du transport des déchets que lors de leur chargement ou déchargement.

L'invention a aussi comme objectif de faciliter la mise en place du dispositif dans le véhicule et son rangement lorsqu'il n'est pas utilisé.

Avec ces objectifs en vue, l'invention a donc pour objet un dispositif de protection de l'habitacle d'un véhicule automobile, comprenant une enveloppe souple adaptable à l'intérieur dudit véhicule et des moyens de maintien de l'enveloppe dans le dit habitacle.

Selon l'invention, le dispositif est caractérisé en ce que l'enveloppe comporte, au moins en partie sur le pourtour de son ouverture arrière, une bavette de protection qui est agencée pour recouvrir le bord de l'ouverture du coffre, et dont au moins la partie supérieure forme un rabat en continuité avec la paroi de plafond de l'enveloppe, et comporte des moyens de maintien agencés pour maintenir ledit rabat dans la feuillure de pourtour de l'ouverture du coffre.

Ces moyens de maintien peuvent notamment être des moyens de fixation par crochets ou par aimants ou une forme adaptée au pourtour du bord de l'ouverture du coffre, et plus particulièrement au pourtour du joint de porte qui couvre généralement ledit bord de l'ouverture du coffre, ou encore un élastique de bord du rabat maintenant le rabat dans la feuillure.

Au niveau de l'ouverture de coffre, les véhicules comportent classiquement une feuillure destinée notamment à recueillir et canaliser latéralement les eaux de pluie passant entre le bord supérieur de la porte du coffre et le bord fixe de la carrosserie en regard. Le bord de cette feuillure porte un joint sur lequel la paroi intérieure de la porte de coffre vient s'appliquer lorsque la porte est fermée, pour assurer une étanchéité complémentaire et notamment une étanchéité à l'air. L'invention tire profit de cette feuillure pour assurer de manière particulièrement simple le maintien de l'enveloppe, au moins dans la partie supérieure de l'ouverture de coffre, par l'intermédiaire dudit rabat, tout en recouvrant également par ce rabat les zones du revêtement intérieur de l'habitacle proches de l'ouverture de coffre, au niveau du toit et de la partie supérieure des parois latérales. Ainsi non seulement la protection de ces zones est parfaitement assurée, en particulier lors du chargement des déchets, tels que branchages ou similaires, mais de plus le maintien du bord de l'enveloppe est assuré facilement, notamment grâce à l'utilisation des aimants ou autres moyens de maintien utilisés et, de plus encore, parfaitement maintenu lorsque la porte du coffre est fermée, par coincement du rabat entre le joint de coffre et ladite porte.

Selon une disposition particulière, la bavette s'étend latéralement à partir des côtés de l'ouverture de l'enveloppe, en prolongement des panneaux latéraux de celle-ci, sous forme de volets latéraux agencés pour recouvrir les bords arrières des parois latérales du véhicule lors du chargement ou déchargement de déchets, et protéger ainsi ces bords latéraux et les optiques de feux arrières couramment situés sur ces bords latéraux arrière de la carrosserie. Les zones de liaison entre le rabat et les volets latéraux sont agencées pour recouvrir les angles supérieurs de l'ouverture de coffre, assurant ainsi leur protection.

En partie basse, la bavette s'étend également par un pan arrière de fermeture, en prolongement continu de la paroi de fond de l'enveloppe, vers l'arrière, qui, lorsqu'il est abaissé, recouvre et protège le seuil du coffre et le pare-choc lors des chargements et déchargements de déchets. Ce pan est par ailleurs dimensionné pour constituer, lorsqu'il est relevé, une paroi de fermeture arrière de l'enveloppe, qui protège également le revêtement interne de la porte arrière de la voiture. Ce pan est par ailleurs préférentiellement relié par des panneaux d'angles souples aux rabats latéraux, pour assurer une continuité de la bavette de protection tout autour de l'ouverture arrière de l'enveloppe, en particulier lorsque le pan arrière est abaissé lors des chargements et déchargements. Dans la position relevée du pan arrière de fermeture, les rabats latéraux et les panneaux d'angles souples sont repliés préalablement vers l'intérieur, de sorte qu'ils sont recouverts par le pan arrière de fermeture, dont les bords peuvent alors être reliés aux bords arrières des panneaux latéraux de l'enveloppe, par des crochets, bandes auto-agrippantes ou autres moyens de maintien temporaire similaires.

Le pan arrière de fermeture est maintenu en position relevée, de manière à obturer au mieux l'ouverture arrière de l'enveloppe, par des moyens de liaison avec le rabat supérieur de l'enveloppe, ou par des crochets raccordés aux charnières du coffre, ou encore préférentiellement en ayant son bord recouvrant également le joint de coffre, par dessus le rabat supérieur, et également maintenu par des aimants dans la gorge de feuillure supérieure de l'ouverture du coffre.

Selon une disposition complémentaire, le plafond de l'enveloppe est par ailleurs maintenu, vers l'avant, par des crochets agencés pour s'accrocher sur les poignées passagers classiquement disposés dans l'habitacle au dessus des portières latérales arrières ou des vitres latérales arrières. Selon une disposition particulière, l'enveloppe comporte au niveau des angles entre les parois latérales et la paroi de plafond, des fourreaux dans lesquels peuvent être glissés, de manière éventuellement amovible, des tiges d'armature permettant de rigidifier l'enveloppe et d'éviter son affaissement, dans la partie avant maintenue seulement aux poignées passagers. Avantageusement, les crochets de fixation sur ces poignées sont montés librement coulissant sur ces tiges d'armatures, dans des zones de discontinuité des fourreaux, ce qui permet d'adapter aisément la position des dits crochets en fonction de la position desdites poignées. Ces zones de discontinuité peuvent être multiples et de petite largeur, pour limiter le coulissement des crochets sur les tiges d'armature par les portions de fourreaux entourant une discontinuité, et ainsi maintenir le positionnement de l'enveloppe dans la direction longitudinale de la voiture, tout en gardant l'adaptabilité grâce à la multiplicité de ces zones. Alternativement, les zones de discontinuité peuvent être plus larges, les portions de fourreau pouvant être réduites jusqu'à ne former que des sangles passant autour des tiges d'armature, et les crochets étant alors verrouillables en position sur la longueur des tiges d'armature, par exemple par des rondelles autobloquantes, joints toriques montés serrés, coincement par arcboutement, etc.

Selon une variante, les panneaux latéraux sont maintenus par des attaches comportant des aimants. Ces aimants peuvent être fixés sur une partie de la carrosserie du véhicule, par exemple au niveau d'un montant de porte, ou à la périphérie de l'ouverture d'une porte latérale. Dans ce dernier cas, l'attache est pincée, lors de la fermeture de la porte latéral, entre la porte et un joint d'étanchéité généralement prévu à la périphérie de l'ouverture de porte. De préférence, l'attache est reliée au niveau de la jonction entre la paroi latérale et la paroi de plafond.

Selon une disposition optionnelle, la paroi avant de l'enveloppe, comporte une trappe, située latéralement au niveau du siège passager avant, permettant de glisser des objets longs vers le tableau de bord, par-dessus le dossier rabattu du siège passager avant. Cette trappe est obturée, lorsqu'elle n'est pas utilisée, par un panneau de fermeture souple fixé de manière détachable sur la paroi avant de l'enveloppe au moyen de bandes auto-agrippantes, fermeture à glissière, boutons, etc. Préférentiellement, le bord inférieur dudit panneau de fermeture est relié solidairement à la paroi de fond, ou à la paroi avant, de l'enveloppe. En position ouverte d'utilisation, le panneau de fermeture, dimensionné suffisamment largement à cet effet, est déployé vers l'avant, sans discontinuité à partir de la paroi de fond ou de la paroi avant de l'enveloppe, et recouvre le dossier rabattu du siège avant sur lequel il est maintenu par coincement ou par des ventouses, crochets ou autres moyens similaires. Le panneau de fermeture peut même s'étendre jusqu'à recouvrir en partie la planche de bord devant le siège avant et être maintenue sur celle-ci de manière similaire par des ventouses, crochets, etc.

Optionnellement encore, l'enveloppe peut également comporter une ouverture latérale, située au niveau d'une portière latérale arrière, cette ouverture permettant d'effectuer un chargement latéral. Un panneau d'obturation, préférentiellement lié à l'enveloppe par son bord inférieur, en assure la fermeture de manière détachable, par fermeture à glissière, boutons, bandes auto-agrippantes ou autres.

Optionnellement encore, la paroi avant et le pan arrière de fermeture comportent une zone de vision à travers laquelle la vision est possible. Une telle zone de vision est réalisée par exemple par l'utilisation d'une toile particulière à la place de la toile constituant la paroi avant ou le pan arrière, respectivement. On peut ainsi utiliser une feuille plastique transparente, ou une toile ajourée, autrement dit un filet à maille serrée. Ainsi, on préserve la visibilité vers l'arrière pour le conducteur depuis le rétroviseur intérieur lorsque celle-ci n'est pas interrompue par le chargement. Lorsque la toile est ajourée, l'air peut également circuler, ce qui est un avantage pour pouvoir placer un animal dans l'enveloppe. La surface couverte par les zones de vision peut être plus ou moins large, entre la taille d'une lucarne ou la largeur complète de l'enveloppe. Elle se situe dans la partie supérieure de l'enveloppe. Optionnellement, les parois latérales peuvent également être traitées de la sorte.

Grâce à l'invention, et à ses différentes variantes de réalisation, le dispositif de protection permet de protéger de manière simple, efficace et peu coûteuse, les garnitures, vitrages et autres parois du véhicule contre les salissures, les griffures et, en partie, contre les coups. Le dispositif est rapide à mettre en place et à retirer. Il peut éventuellement être tiré hors du coffre pour évacuer plus facilement les déchets dans une benne en contrebas. Dans le cas d'enveloppes de relativement petites dimensions, celle-ci peut éventuellement être remplie préalablement puis chargée.

Le dispositif ne prend pas de place une fois replié, et peut notamment être enroulé sur lui même, rangé sous le tapis de coffre ou intégré à celui-ci. Selon cette dernière variante, lors du rangement, l'enveloppe est repliée sur elle-même sur sa paroi de fond, préférentiellement rigide ou semi-rigide, puis repliée en deux de manière que la face inférieure de la portion de paroi de fond ainsi repliée constitue alors la surface de plancher du coffre de la voiture, en utilisation courante. L'avantage de cette disposition est que le dispositif de protection reste intégré dans le véhicule et disponible en permanence par un simple déploiement, comme on le verra par la suite.

Selon une autre possibilité de rangement, le dispositif comporte un ensemble de rangement comportant une toile souple de format adapté pour entourer l'enveloppe repliée et roulée sur elle-même sous une forme sensiblement cylindrique, et deux couvercles d'extrémités pour recouvrir les extrémités opposées du cylindre ainsi formé, les couvercles étant articulés liés sur la toile souple en une zone de liaison et pouvant y être maintenus en une zone de fermeture sensiblement diamétralement opposée à ladite zone de liaison, de sorte que les couvercles maintiennent ainsi la toile souple enserrant l'enveloppe, par recouvrement de ses bords. Une poignée pouvant servir de poignée de transport, est avantageusement fixée sur les couvercles dans la dite zone de fermeture, et assure ainsi à la foi le maintien des couvercles et la facilité de manutention du dispositif lorsqu'il n'est pas utilisé.

D'autres caractéristiques et avantages apparaîtront dans la description qui va être faite d'un dispositif conforme à l'invention, et de son utilisation.

On se reportera aux dessins annexés dans lesquels :
- la figure 1 est une vue schématique en perspective d'une voiture pourvue d'un dispositif de protection conforme à l'invention, la forme générale de ladite voiture étant représentée en traits mixtes, de même que les sièges avant,
- la figure 2 est une autre vue du dispositif en perspective arrière, dans la voiture symbolisée uniquement par ses roues et le siège avant pour mieux visualiser le dispositif et son agencement dans le coffre,
- la figure 3 est une vue de détail de la fixation supérieure latérale sur une poignée passager arrière,
- la figure 4 est une vue de détail en coupe et perspective du maintien de l'enveloppe sur le bord supérieur de l'ouverture arrière du coffre,
- la figure 5 illustre les différentes phases du repliement et le rangement du dispositif dans le coffre selon une variante préférée,
- la figure 6 représente un mode de rangement du dispositif prêt à être enroulé dans une toile de rangement,
- la figure 7 représente le dispositif dans sa toile de rangement fermée et prêt pour son transport.

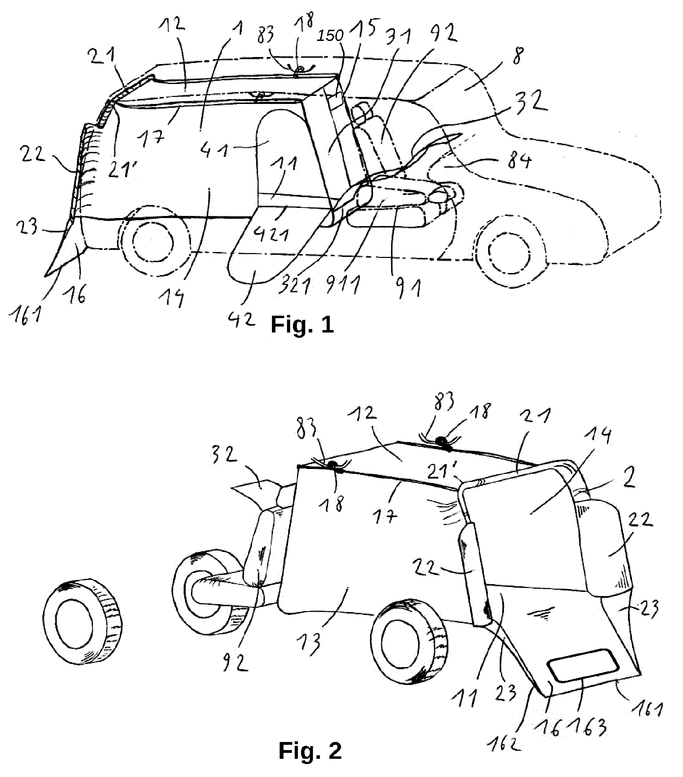

Sur les figures 1 et 2, le dispositif de protection est représenté dans sa position déployée d'utilisation dans un véhicule 8, dont on a également représenté schématiquement le siège avant droit 91 et le siège avant gauche 92.

Le dispositif de protection comporte essentiellement une enveloppe souple 1 de forme générale sensiblement parallélépipédique, et plus précisément de forme adaptée à la forme de l'espace coffre de l'habitacle 80 du véhicule 8, comme on le voit figure 1.

L'enveloppe souple 1 comporte :
- une paroi de fond ou de plancher 11
- une paroi de plafond 12,
- deux parois latérales 13, 14
- une paroi avant 15.

L'enveloppe est réalisée par exemple en toile de bâche, de type camion, en toile plastique tissée étanche.

Les différentes parois sont reliées entre elles par couture, collage, soudage, ou autres moyens équivalents, et ménagent une ouverture arrière totale, c'est à dire s'étendant sur toute la surface de la face arrière du parallélépipède défini par les parois mentionnées ci-dessus.

L'enveloppe souple comporte également un pan de fermeture arrière 16, formé en prolongement vers l'arrière de la paroi de fond 11, éventuellement d'une seule pièce avec la dite paroi de fond, et dimensionné de manière à pouvoir fermer la dite ouverture arrière de l'enveloppe lorsqu'il est amené dans une position relevée.

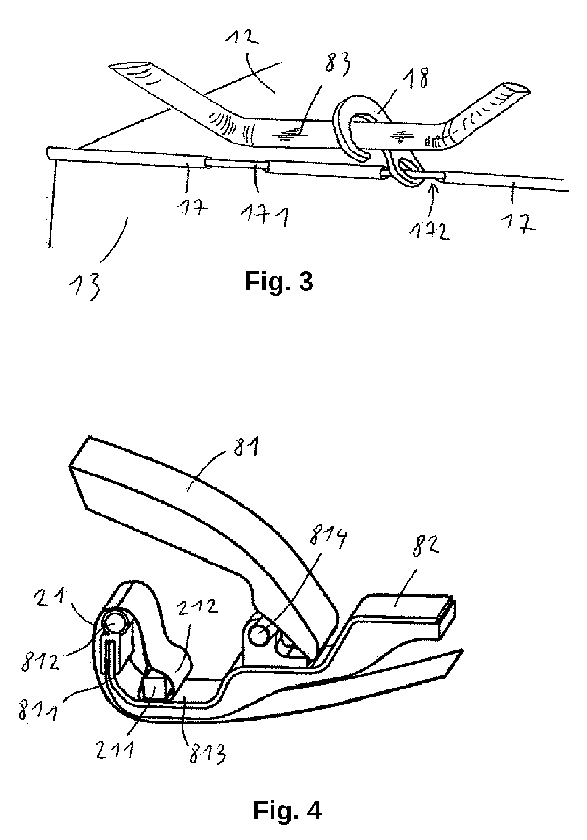

L'enveloppe comporte sur le pourtour de son ouverture arrière une bavette de protection 2 qui comporte :
- une partie supérieure formant un rabat 21, en continuité avec la paroi de plafond 12 de l'enveloppe, et agencé pour recouvrir le bord supérieur 811 de l'ouverture du coffre, comme on le voit figure 4,
- deux volets latéraux 22 s'étendant latéralement à partir des côtés de l'ouverture de l'enveloppe, en prolongement des panneaux latéraux de celle-ci, et agencés pour recouvrir les bords arrières des parois latérales 82 du véhicule.

Les volets latéraux 22 sont reliés par leurs extrémités supérieures au rabat 21, et par leurs extrémités inférieures au pan de fermeture arrière 16, par l'intermédiaire de panneaux d'angles souples 23, lesquels peuvent aussi être formés d'une seule pièce avec les volets latéraux 22.

Ainsi la bavette de protection 2 comportant le rabat 21, les volets latéraux 22, les panneaux d'angles souples 23, et le pan de fermeture arrière 16, assure un recouvrement complet et continu des bords de l'ouverture de coffre, que ce soit sur son bord supérieur 811 par le rabat 21, sur ses bords latéraux, comportant notamment les optiques de feux arrières, par les volets latéraux 22, et son bord inférieur avec notamment le pare-choc arrière, recouverts par le pan de fermeture arrière 16, complété par les panneaux d'angles souples 23. Optionnellement, le pan de fermeture arrière 16 comporte une zone de vision 163 réalisée par un filet à maille serrée cousu à sa périphérie au pan de fermeture arrière 16 aux bords d'une découpe. La position de la zone de vision 163 est telle que la vision depuis l'intérieur du véhicule reste possible vers l'arrière du véhicule.

Le rabat 21 comporte des aimants 211, par exemple maintenu dans un ourlet 212 formé sur le bord du rabat, de manière que, lorsque le rabat 21 est rabattu sur le bord supérieur 811 de l'ouverture de coffre, classiquement pourvu d'un joint d'étanchéité 812, les aimants appliquent l'ourlet 212 en pression sur la tôle métallique de la carrosserie conformée pour former la feuillure 813 de la porte de coffre 81, laquelle est articulée par les charnières 814 sur le bord du toit 82 de la voiture.

Alternativement, le maintien du rabat 21 peut aussi être obtenu simplement par une forme 21' conférée à celui-ci dans les zones de liaison du rabat avec les volets 22, la dite forme étant adaptée pour que les dites zones de liaison s'insèrent en recouvrement sur les angles arrondis du bord du coffre et assurent naturellement le maintien du rabat, sans nécessiter d'autres moyens de maintien.

Comme illustré par la figure 3, l'enveloppe 1 comporte au niveau des angles entre les parois latérales 13, 14, et la paroi de plafond 12, des fourreaux 17 dans lesquels sont glissés des tiges d'armature 171 permettant de rigidifier le plafond de l'enveloppe. Des crochets de fixation 18 sont maintenus sur les tiges 171, au niveau de zones de discontinuité 172 des fourreaux, en étant enfilés de manière coulissante sur les dites tiges 171, les crochets 18 étant par ailleurs conformés pour être accrochés sur les poignées passagers 83 du véhicule, classiquement situées au dessus des portières latérales arrières.

Avantageusement, comme illustré aux figures 1 et 2, la paroi avant de l'enveloppe, comporte une trappe 31, située latéralement au niveau du siège passager avant 91, permettant de glisser des objets longs vers le tableau de bord, par-dessus le dossier rabattu 911 du siège passager avant. Un panneau de fermeture souple 32 est lié par son bord inférieur 321 à la paroi de fond 11, en continuité avec celle-ci, ou avec une partie inférieure de la paroi avant 15. Lorsque la trappe 31 n'est pas utilisée, elle est fermée par le panneau de fermeture souple 32 qui est fixé de manière détachable sur la paroi avant 15 de l'enveloppe au moyen de bandes auto-agrippantes, fermeture à glissière, ou autres moyens de fixation aisément détachables. Pour le transport d'objets longs, la trappe est ouverte et le panneau de fermeture souple 32 est rabattu sur la face arrière du dossier 911 du siège 91, rabattu en avant, et s'étend jusqu'à la planche de bord 84 et y est maintenu par tous moyens adéquats, pour protéger le dit siège avant et la planche de bord.

Optionnellement, la paroi avant 15 comporte une zone de vision 150 réalisée par un filet à maille serrée cousu à sa périphérie à la paroi avant 15 aux bords d'une découpe. La position de la zone de vision est telle que la vision depuis le rétroviseur intérieur reste possible vers l'arrière du véhicule.

Optionnellement aussi, l'enveloppe 1 peut comporter une ouverture latérale 41, située au niveau d'une portière latérale arrière, cette ouverture permettant d'effectuer un chargement latéral. Un panneau d'obturation 42, est lié à la paroi de fond 11 de l'enveloppe par son bord inférieur 421, et assure en position relevée la fermeture de manière détachable, par fermeture à glissière, boutons, bandes auto-agrippantes ou autres. En position ouverte, le panneau 42 recouvre le seuil de porte pour assurer sa protection contre toute salissure.

Pour utiliser le dispositif de protection, on le déploie dans le véhicule, comme on le voit aux figures 1 et 2, avec sa paroi de fond 11 étendue sur le plancher du véhicule. Sa paroi de plafond 12 est accrochée sur les poignées passagers 83 par les crochets 18, et le rabat 21 est rabattu par dessus le joint 812 et maintenu dans la feuillure 813 par les aimants 211. Les volets 22 sont rabattus latéralement vers l'extérieur pour recouvrir les bords latéraux de l'ouverture de coffre et les blocs optiques de feux arrières, et le pan de fermeture 16 est rabattu au dessus du seuil du coffre et du pare-choc.

On peut alors effectuer le chargement, en utilisant au maximum l'espace disponible, grâce notamment à la souplesse de l'enveloppe qui autorise une adaptation de sa forme à l'espace réel disponible dans l'habitacle.

Lorsque le chargement est terminé, on rabat les volets latéraux 22 vers l'intérieur puis on relève le pan de fermeture arrière 16 dont on maintient le bord 161 préférentiellement en le passant par dessus le rabat 21 puis avec des aimants liés audit bord 161, comme pour le maintien du rabat 21. On peut aussi assurer le maintien du bord 161 par d'autres moyens tels que bandes auto-agrippantes, crochets, boutons etc. reliant le bord d'extrémité 161 du pan arrière 16 sur le rabat 21 ou à proximité de celui-ci sur la paroi de plafond 12 par exemple, et éventuellement raccorder aussi les bords latéraux 162 du pan 16 sur les parois de côté 13, 14 de l'enveloppe.

Lorsque le pan arrière de fermeture 16 est ainsi relevé et fixé, on peut fermer la porte de coffre 81, enserrant ainsi le rabat 21, et éventuellement le bord 161 du pan 16, entre ladite porte de coffre et le joint 812.

Pour décharger le dispositif, il suffit d'effectuer les opérations inverses, donnant ainsi accès au chargement après avoir rabattu le pan 16 vers le bas et les volets latéraux sur les côtés.

Après le déchargement, et lorsque le dispositif n'est pas utilisé, l'enveloppe peut être rangée repliée ou roulée, hors du véhicule, ou conservée ainsi repliée ou roulée sur elle même dans le coffre du véhicule.

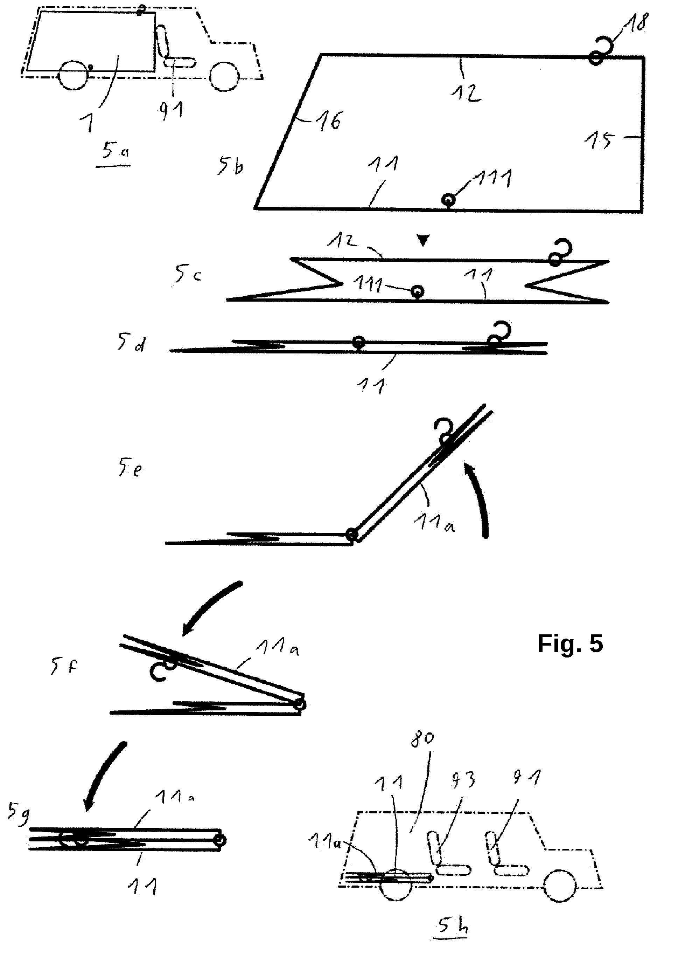

Selon une disposition avantageuse illustrée figure 5, l'enveloppe peut être repliée sur elle-même et former après ce repliage un tapis de coffre restant à demeure dans le véhicule.

Sur la vue schématique 5a en haut à gauche de la figure 5, on a représenté le dispositif en position d'utilisation dans un véhicule à sièges arrières amovibles, l'enveloppe 1 s'étendant dans le volume du coffre et à l'emplacement des sièges arrières, ceux-ci ayant été préalablement déposés, et jusqu'au voisinage des dossiers des sièges avant.

L'enveloppe ainsi déployée est représentée, seule, sur le croquis 5b, où on note la présence d'une zone de charnière 111 formée sur la paroi de fond, sensiblement au milieu de de celle-ci et orientée selon la direction transversale du véhicule. La paroi de fond 11 peut être rigide et alors la zone de charnière est une vraie charnière rigide ou semi rigide. Alternativement, la paroi de fond 11 peut rester souple et la zone de charnière 111 peut alors être formée par un simple pli, destiné simplement à former un guide pour faciliter le repliage de l'enveloppe, comme on va le voir.

Pour ranger l'enveloppe, on détache les moyens de fixation maintenant la paroi de plafond 12 sous le toit du véhicule, tels que les crochets 18 et les aimants 211, puis on aplatit l'enveloppe sur elle-même, comme on le voit sur le croquis 5c, en profitant de la souplesse des parois latérales 13, 14, de la paroi avant 15 et du pan de fermeture 16 ainsi que des autres parties de l'enveloppe, jusqu'à ce que l'enveloppe 1 soit totalement aplatie, comme représenté en 5d.

On replie ensuite l'ensemble selon la charnière 111, en ramenant vers l'arrière la partie 11a située le plus vers l'avant, comme montré sur les croquis 5e et 5f, jusqu'à la position de repli total montrée en 5g. La partie avant 11a de la paroi de fond est alors située au-dessus et forme le plancher du coffre, en minimisant l'encombrement de l'enveloppe dont le volume utilisable n'est quasiment pas réduit, permettant de replacer les sièges arrières 93 dans leur position d'utilisation courante, comme représenté sur le croquis 5h.

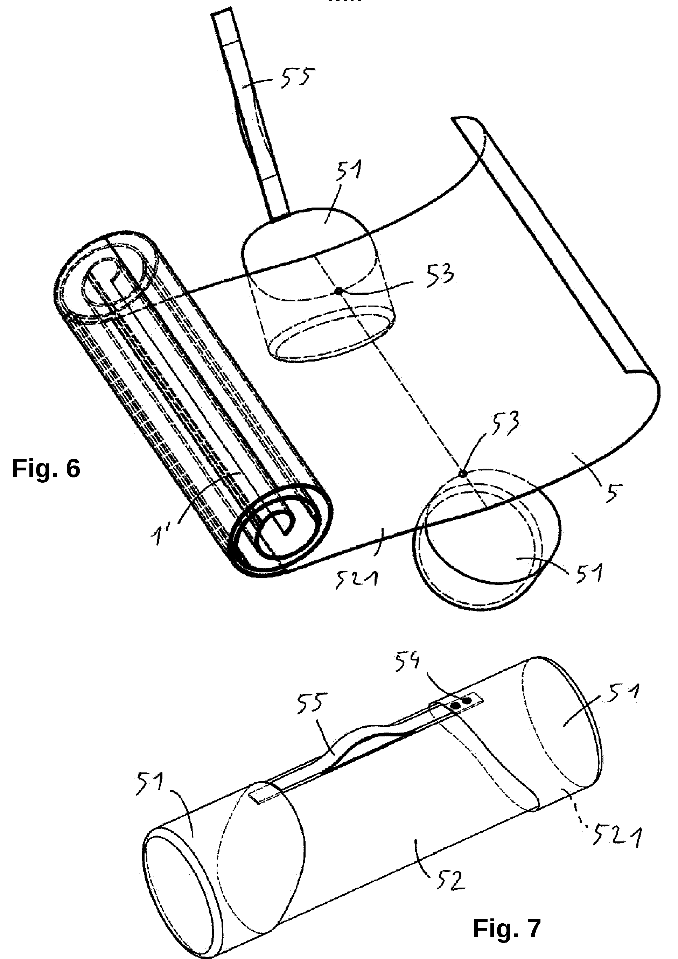

Un autre mode de rangement est illustré sur les figures 6 et 7. Dans cette variante, l'enveloppe 1 est repliée et enroulée sur elle-même pour former un cylindre 1' et une toile soule de rangement 5 est utilisée pour entourer l'enveloppe ainsi enroulée. Cette toile de rangement 5 comporte deux couvercles latéraux 51, de forme généralement cylindrique et préférentiellement tronqués obliquement, qui peuvent se rabattre sur les extrémités du cylindre 52 formé par l'enveloppe 1 enroulée dans la toile de rangement 5, comme on le voit figure 7.

Les couvercles 51 sont fixés sur la toile 5 dans des zones de liaisons, par exemple par des coutures 53, formant charnières pour permettre le rabattement des couvercles sur les extrémités 521 du cylindre 52. Par ailleurs, les couvercles peuvent être maintenus dans cette position rabattue, par des moyens de fermeture tels que boutons pressions 54 ou autres moyens équivalents prévus dans des zones de fermeture sensiblement diamétralement opposées aux zones de liaison. Une poignée de transport 55 est également prévue, fixée sur la toile 5 ou pouvant préférentiellement être formée d'une sangle servant aussi maintenir les couvercles reliés en position rabattue.

La toile de rangement peut être une simple toile rectangulaire, non liée à l'enveloppe, et sur laquelle les couvercles sont fixés. La toile 5 peut aussi être liée à l'enveloppe 1, comme montré figure 6, par exemple par couture ou autres moyens équivalents. La toile peut aussi constituer une partie d'une des parois de l'enveloppe. Les couvercles 51 pourraient aussi être fixés de manière amovible sur la toile 5 dans les zones de liaison, par des boutons pressions ou équivalents.

L'invention n'est pas limitée au mode de réalisation qui a été décrit ci-dessus uniquement à titre d'exemple.

En particulier, le maintien du rabat 21 pourra aussi être assuré par d'autres moyens que des aimants, par exemple par des crochets, par exemple accrochés sur les charnières de la porte du coffre, ou par une forme particulière conférée aux extrémités latérales du rabat, au niveau des zones de liaison entre le rabat et les volets latéraux, cette forme étant adaptée pour que les dites extrémités latérales du rabat s'insèrent sur les zones d'angles supérieurs de l'ouverture de coffre. De tels moyens pourront aussi être complétés par des moyens élastiques, par exemple un élastique passé dans l'ourlet 212, à la place des aimants, qui tend à raccourcir la longueur de cet ourlet et ainsi à le plaquer dans la feuillure.

Egalement, les crochets de fixation de la paroi de plafond sur les poignées passagers pourront aussi être remplacés par d'autres moyens de fixation temporaires aisément démontables, tels que par exemple des bandes auto-agrippantes, etc.

## Revendications

1. Dispositif de protection de l'habitacle d'un véhicule automobile (8), comprenant une enveloppe souple adaptable à l'intérieur dudit véhicule et des moyens de maintien de l'enveloppe dans le dit habitacle, l'enveloppe (1) comporte, au moins en partie sur le pourtour de son ouverture arrière, une bavette de protection (2) dont la partie supérieure forme un rabat (21) en continuité avec la paroi de plafond (12) de l'enveloppe et est agencée pour recouvrir un bord supérieur (811) de l'ouverture du coffre,
**caractérisé en ce que** le dit rabat (21) comporte des moyens de maintien agencés pour maintenir ledit rabat dans la feuillure de pourtour de l'ouverture du coffre.

2. Dispositif selon la revendication 1, **caractérisé en ce que** les moyens de maintien sont des moyens de fixation par crochets ou par aimants (211) ou une forme (21') adaptée au pourtour du bord de l'ouverture du coffre, et/ou un élastique de bord du rabat.

3. Dispositif selon la revendication 1, **caractérisé en ce que** la bavette s'étend latéralement à partir des côtés de l'ouverture de l'enveloppe, en prolongement des panneaux latéraux de celle-ci, sous forme de volets latéraux (22) agencés pour recouvrir les bords arrières des parois latérales du véhicule.

4. Dispositif selon la revendication 1, **caractérisé en ce qu'**il comporte un pan arrière de fermeture (16), en prolongement continu de la paroi de fond (11) de l'enveloppe, vers l'arrière, qui, lorsqu'il est abaissé, permet de recouvrir et protéger le seuil du coffre et le pare-choc et qui est par ailleurs dimensionné pour constituer, lorsqu'il est relevé, une paroi de fermeture arrière de l'enveloppe.

5. Dispositif selon les revendications 3 et 4 combinées, **caractérisé en ce que** le pan arrière (16) de fermeture est relié par des panneaux d'angles (23) souples aux rabats latéraux (22), pour assurer une continuité de la bavette de protection tout autour de l'ouverture arrière de l'enveloppe.

6. Dispositif selon la revendication 4, **caractérisé en ce que** le pan arrière de fermeture (16) est maintenu en position relevée, de manière à obturer l'ouverture arrière de l'enveloppe, par des moyens de liaison avec le rabat supérieur de l'enveloppe, ou par des crochets raccordés aux charnières du coffre, ou en ayant son bord recouvrant également le joint de coffre, par dessus le rabat supérieur, et également maintenu par des aimants dans la gorge de feuillure supérieure de l'ouverture du coffre.

7. Dispositif selon la revendication 1, **caractérisé en ce que** le plafond (12) de l'enveloppe est maintenu, vers l'avant, par des crochets (18) agencés pour s'accrocher sur des poignées passagers (83) du véhicule.

8. Dispositif selon la revendication 1, **caractérisé en ce que** l'enveloppe comporte au niveau des angles entre les parois latérales (13, 14) et la paroi de plafond (12), des fourreaux (17) dans lesquels peuvent être glissés, de manière éventuellement amovible, des tiges d'armature (171) permettant de rigidifier l'enveloppe.

9. Dispositif selon les revendications 7 et 8 combinées, **caractérisé en ce que** les crochets (18) de fixation sur les poignées passagers (83) sont montés librement coulissant, et optionnellement verrouillables en position, sur les tiges d'armatures (171), dans des zones de discontinuité (172) des fourreaux (17).

10. Dispositif selon la revendication 1, **caractérisé en ce que** la paroi avant (15) de l'enveloppe, comporte une trappe (31), située latéralement au niveau du siège passager avant, obturable par un panneau de fermeture souple (32) qui est fixé de manière détachable sur ladite paroi avant et qui peut être déployé vers l'avant pour recouvrir le dossier (911) rabattu du siège avant et peut s'étendre jusqu'à recouvrir en partie la planche de bord (84).

11. Dispositif selon la revendication 1, **caractérisé en ce que** l'enveloppe comporte une ouverture latérale (41), située au niveau d'une portière latérale arrière, et un panneau d'obturation (42) pour assurer la fermeture de l'ouverture latérale de manière détachable.

12. Dispositif selon la revendication 1 **caractérisé en ce que** la paroi de fond (11) comporte une zone de charnière (111) permettant à l'enveloppe d'être repliée sur elle-même de manière que la face inférieure de la portion de paroi de fond (11a) ainsi repliée constitue alors une surface de plancher du coffre du véhicule.

13. Dispositif selon la revendication 1, dans lequel la paroi avant (15) et le pan arrière (16) de fermeture comporte une zone de vision (150, 163) à travers laquelle la vision est possible.

14. Dispositif selon la revendication 1 **caractérisé en ce qu'**il comporte un ensemble de rangement comportant une toile souple (5) de format adapté pour entourer l'enveloppe (1) repliée et roulée sur elle-même sous une forme sensiblement cylindrique (1'), et deux couvercles d'extrémités (51) pour recouvrir les extrémités opposées du cylindre (52) ainsi formé, les couvercles étant articulés liés sur la toile souple en une zone de liaison (53) et pouvant y être maintenus en une zone de fermeture (54) sensiblement diamétralement opposée à ladite zone de liaison, de sorte que les couvercles (51) maintiennent ainsi la toile souple (5) enserrant l'enveloppe (1), par recouvrement de ses bords (521) .

15. Dispositif selon la revendication 14 **caractérisé en ce qu'**il comporte une poignée (55) pouvant servir au transport, fixée sur les couvercles (51) dans la dite zone de fermeture.
